# FASCICULE DE BREVET EUROPEEN

(11) **EP 4 100 624 B1**
(45) Date de publication et mention de la délivrance du brevet: **27.12.2023**
(21) Numéro de dépôt: 21706642.2
(22) Date de dépôt: 28.01.2021
(51) Int. Cl.: F01D 5/14, F01D 5/16, F01D 5/22

(54) **AUBE DE TURBOMACHINE D'AÉRONEF**
LEITSCHAUFEL FÜR EIN FLUGZEUGTURBINENTRIEBWERK
VANE FOR AN AIRCRAFT TURBINE ENGINE

(30) Priorité: 07.02.2020 FR 2001224
(43) Date de publication de la demande: 14.12.2022
(73) Titulaire: SAFRAN AIRCRAFT ENGINES, 75015 Paris (FR)
(72) Inventeur: MALLAT-DESMORTIERS, Jean-Philippe, 77550 MOISSY-CRAMAYEL (FR); JEANTY, Peter Shamma, 77550 MOISSY-CRAMAYEL (FR); DELCOIGNE, Eric Jacques, 77550 MOISSY-CRAMAYEL (FR); GARREAU, Edouard Emmanuel, 77550 MOISSY-CRAMAYEL (FR); TSASSIS, Thomas, 77550 MOISSY-CRAMAYEL (FR); JUGE, Samuel Laurent Noël Mathieu, 77550 MOISSY-CRAMAYEL (FR); DESBOIS, Lucas Geoffrey, 77550 MOISSY-CRAMAYEL (FR)
(74) Mandataire: Gevers & Orès
(86) Numéro de dépôt international: PCT/FR2021/050162
(87) Numéro de publication internationale: WO 2021/156559

(56) Documents cités:
- WO-A1-2014/118456
- FR-A1- 2 967 714
- FR-A1- 2 985 759
- FR-A1- 3 077 600
- US-A1- 2019 309 638
- US-B1- 6 491 498

## Description

### Domaine technique de l'invention

La présente invention se rapporte au domaine général des aubes pour une turbomachine d'aéronef.

### Arrière-plan technique

L'arrière-plan technique comprend notamment les documents FR-A1-3 077 600, US-B1 -6,491,498, WO-A1 -2014/118456, FR-A1-2 967 714 et US-A1-2019/309638. Classiquement, une turbine axiale de turbomachine se compose d'une succession d'étages axiaux (selon l'axe de circulation des flux de gaz) disposés en série. Chaque étage comporte une roue mobile à aubes formant rotor et un distributeur aubagé formant stator. La roue mobile est mise en rotation en vis-à-vis du distributeur correspondant.

Dans la présente demande, l'amont et l'aval sont définis par rapport au sens d'écoulement normal des flux d'air (de l'amont vers l'aval) à travers la turbomachine. On appelle "axe de la turbomachine", l'axe de rotation du rotor principal de la turbomachine. La direction axiale correspond à la direction de l'axe de la turbomachine, et une direction radiale est une direction perpendiculaire à l'axe de la turbomachine et coupant cet axe. De même, un plan axial est un plan contenant l'axe de la turbomachine, et un plan radial est un plan perpendiculaire à cet axe. Les adjectifs "intérieur" et "extérieur" sont utilisés en référence à une direction radiale de sorte que la partie intérieure d'un élément est, suivant une direction radiale, plus proche de l'axe de la turbomachine que la partie extérieure du même élément. L'axe d'empilement d'une aube est l'axe perpendiculaire à l'axe de la turbomachine, qui passe par le centre de gravité de la section la plus intérieure de la pale de l'aube (i.e., la section la plus proche de l'axe de la turbomachine). Typiquement, une aube de turbomachine comprend une pale s'étendant suivant l'axe d'empilement de l'aube, entre les extrémités proximale et distale (i.e., intérieure et extérieure) de l'aube.

La roue mobile est classiquement constituée d'un disque annulaire centré sur l'axe de rotation de la roue, sur lequel sont fixées une pluralité d'aubes.

Un exemple d'aube est représenté sur la figure 1. Une aube de ce type est décrite dans le document FR-A1-2 985 759. Cette aube 10 comprend une pale 16 s'étendant suivant l'axe d'empilement X de l'aube, entre les extrémités proximale 10A et distale 10B de l'aube 10. A son extrémité proximale 10A, l'aube comprend une plateforme 19 et un pied 12 par lequel elle est fixée au disque (non représenté). A son extrémité distale 10B, l'aube 10 présente un talon 14. Lorsque plusieurs aubes 10 sont fixées sur le disque, leurs talons 14 sont disposés bord à bord de manière à former une couronne circonférentielle délimitant une surface de révolution autour de l'axe A de rotation de la roue. Cette couronne a notamment pour fonction de délimiter la surface extérieure de la veine d'écoulement des flux de gaz circulant entre les pales 16 et de limiter les fuites de gaz au niveau de l'extrémité distale 10B des aubes 10.

Le talon 14 comprend une plateforme 20 délimitant extérieurement la veine d'écoulement du gaz circulant entre les pales 16, et présentant des bords latéraux 21, 22 opposés. La plateforme 20 comporte une partie amont 24 appelée « becquet amont » et une partie aval 28 appelée « becquet aval ». Le talon 14 comprend également des léchettes d'étanchéité amont 31 et aval 32 s'étendant radialement vers l'extérieur à partir de la face extérieure de la plateforme 20. Ces léchettes ont une orientation générale circonférentielle ou transversale par rapport à l'axe de rotation de la roue. Chacun des bords latéraux 21, 22 de la plateforme présente, entre les léchettes amont 31 et aval 32, un profil sensiblement en « Z ».

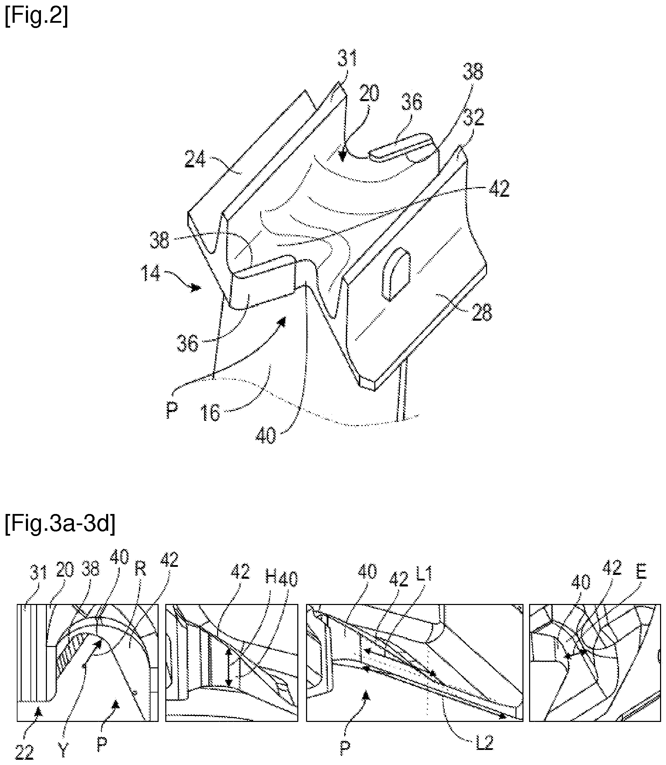

Lorsque plusieurs aubes 10 sont fixées sur le disque, les léchettes amont 31 et aval 32 sont disposées bord à bord de manière à former un anneau rotatif d'axe A, cet anneau étant contenu sensiblement dans un plan radial. Un tel anneau a notamment pour fonction de limiter le jeu existant entre les aubes 10 et un carter (non représenté) qui entoure les aubes 10 afin de limiter les fuites de gaz à cet endroit. Ce carter porte un revêtement annulaire abradable qui peut coopérer par frottement avec les léchettes des aubes afin de limiter ces fuites par effet labyrinthe. Dans le but d'amortir les vibrations auxquelles les aubes 10 sont soumises en fonctionnement, les aubes 10 sont montées sur leur disque avec une contrainte de torsion autour de leur axe d'empilement X. La géométrie des talons 14 est telle que chaque aube 10 est mise en contrainte de torsion par appui sur les aubes 10 voisines principalement le long d'une face latérale 34 de la partie intrados de la léchette amont 31 et une face latérale de la partie extrados de la léchette amont 31 de l'aube 10 voisine. Les faces latérales 34 définissent des surfaces de contact inter-aubes et sont le lieu de frottements importants lors du fonctionnement de la turbomachine. Pour être protégées contre l'usure, les faces latérales 34, sont munies d'un revêtement ou insert en matériau résistant aux frottements. Il peut, par exemple, s'agir d'un matériau commercialisé sous la dénomination Stellite. Ce revêtement anti-usure 36 est mieux visible à la figure 2.

Classiquement, ce revêtement 36 anti-usure est déposé sur les faces latérales 34 par soudure, par exemple par soudure à la goutte, impliquant la création d'un arc électrique pour la fusion de la matière. Il s'agit souvent d'une opération manuelle, l'alliage de type Stellite^{®} étant sous forme d'une goutte liquide lors du dépôt. L'alliage Stellite^{®} est un alliage d'acier à haute teneur en chrome (Cr) et en cobalt (Co). Il peut aussi contenir une petite quantité de tungstène (W) ou de molybdène (Mo) et une petite quantité de carbone (C). L'alliage Stellite^{®} n'est pas forgeable et doit être soit moulé, soit fixé par soudure sur un objet dont il forme une partie ou auquel il est inséré.

Les bords latéraux de la plateforme externe d'une aube sont configurés pour coopérer par complémentarité de formes avec les bords latéraux complémentaires des aubes adjacentes, et comportent chacun un revêtement anti-usure du type précité.

Dans une configuration particulière, l'un des bords latéraux forme une pointe en creux P et est configuré pour recevoir une pointe en saillie d'un des bords latéraux d'une aube adjacente. Cette pointe en creux P comporte une cuvette 38 de réception du revêtement anti-usure 36. Cette pointe en creux P comporte en outre une première portion 40 de surface cylindrique concave qui est formée en partie dans la plateforme externe 20 et en partie dans un muret 42 qui est en saillie sur cette plateforme et qui est relié à la léchette 31 (figure 2).

Dans cette configuration, le dépôt du revêtement anti-usure 36 est très problématique. En effet, avec la technique actuelle, les opérations de dépôt du Stellite^{®} via soudage entraîne des criques proches du Stellite^{®}, qui sont non acceptables et augmentent le taux de rebuts des aubes. Cela provient de plusieurs raisons : les revêtements sont localisés dans des confinements géométriques qui rendent l'opération de soudage difficile (accès et visibilité réduite). De plus, un apport de chaleur très local dans une zone de confinement géométrique se traduit par des contraintes locales importantes. Enfin, l'opération de soudage est manuelle, ce qui la rend très dépendante des facteurs humains.

Il existe donc un besoin pour ce type de configuration de limiter au maximum le nombre de criques lors du dépôt de Stellite^{®} dans une pointe en creux, en fournissant des préconisations géométriques de conception de l'aube. Ces préconisations devront rendre la géométrie plus robuste sans pour autant être trop massive afin d'optimiser l'aube

La présente invention propose un perfectionnement à cette technologie, qui apporte une solution simple, efficace et économique à ce problème.

### Résumé de l'invention

La présente invention propose une aube de rotor pour une turbomachine d'aéronef, cette aube présentant un axe de rotation une fois solidaire d'un rotor et un axe d'empilement et comportant une pale s'étendant le long de l'axe d'empilement entre une plateforme interne et une plateforme externe qui porte au moins une léchette en saillie, ladite pale comportant un intrados et un extrados et ladite plateforme externe comportant, du côté desdits intrados et extrados, des bords latéraux configurés pour coopérer par complémentarité de formes avec des bords latéraux complémentaires d'aubes adjacentes, ces bords latéraux comportant chacun un revêtement anti-usure, un de ces bords latéraux formant une pointe en creux comportant une cuvette de réception dudit revêtement et comportant en outre une première portion de surface cylindrique concave formée en partie dans ladite plateforme externe et en partie dans un muret qui est en saillie sur cette plateforme et qui est relié à ladite au moins une léchette, cette première portion de surface s'étendant le long et autour d'un axe virtuel sensiblement parallèle audit axe d'empilement,
caractérisée en ce que :
- ledit muret a une épaisseur mesurée dans une direction sensiblement perpendiculaire audit axe virtuel, qui est supérieure ou égale à 2,5mm, et
- ladite première portion de surface a une hauteur mesurée le long dudit axe virtuel, qui est égale à au moins 150% de l'épaisseur du muret.

L'invention propose ainsi une optimisation de paramètres géométriques de la portion de surface cylindrique concave située dans la pointe en creux de la plateforme externe de l'aube. Les variations de géométrie brutales sont supprimées au niveau de cette portion de surface, ce qui permet de diminuer le risque de criques dans cette zone.

Une simulation de dépôt de Stellite^{®} permet de confirmer l'efficacité de ces préconisations. En effet, en simulant une élévation de la température au niveau du revêtement anti-usure, suivi d'un refroidissement rapide, on constate que les contraintes dans la pointe en creux sont beaucoup plus faibles sur une géométrie avec ces préconisations : les contraintes diminuent en moyenne de 35%.

L'aube selon l'invention peut comprendre une ou plusieurs des caractéristiques ci-dessous, prises isolément les unes des autres ou en combinaison les unes avec les autres :
- ladite première portion de surface a un rayon mesuré par rapport audit axe virtuel, qui est supérieur ou égal à 1,2mm ;
   -- ladite première portion de surface a une hauteur mesurée le long dudit axe virtuel, qui est supérieure ou égale à 3mm,
- ladite pointe en creux comprend une seconde portion de surface plane qui s'étend depuis ladite première portion de surface du côté opposé à ladite au moins une léchette à laquelle est relié ledit muret, cette second portion étant formée en partie dans ladite plateforme externe et en partie dans ledit muret, et s'étendant sensiblement parallèlement audit axe virtuel ;
- ladite plateforme externe comprend une première surface reliée à ladite pale, et une seconde surface opposée sur laquelle ledit muret est en saillie, ce muret comportant une surface de tête, opposée à ladite pale, qui s'étend depuis ladite au moins une léchette jusqu'à un premier congé de raccordement de cette surface de tête à ladite seconde surface ;
- ladite surface de tête est inclinée par rapport à ladite seconde surface d'un angle inférieur ou égal à 35° ;
- ladite plateforme externe porte deux léchettes en saillie sensiblement parallèles, ledit muret s'étendant depuis une première des léchettes jusqu'à distance d'une seconde des léchettes, la distance cumulée du muret et dudit premier congé, mesurée depuis ladite première portion de surface et le long de ladite seconde portion de surface, représentant au moins 40% de la distance cumulée du muret, dudit premier congé et de ladite seconde surface de la plateforme jusqu'à un second congé de raccordement de cette seconde surface à la seconde léchette, ces distances étant mesurées depuis ladite première portion de surface et le long de ladite seconde portion de surface.

La présente invention concerne encore une roue de rotor pour une turbomachine d'aéronef, comportant un disque portant à sa périphérie une rangée annulaire d'aubes telles que décrites ci-dessus.

Avantageusement, les bords latéraux des aubes sont emboîtés les uns dans les autres et comprennent des revêtements anti-usure en appui les uns sur les autres, les aubes étant en appui les unes sur les autres uniquement par l'intermédiaire de leurs revêtements.

La présente invention concerne également une turbomachine d'aéronef, comportant au moins une aube ou une roue telle que décrite ci-dessus.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective d'une d'aube de roue de turbine pour une turbomachine d'aéronef,
[Fig.2] la figure 2 est une vue schématique à plus grande échelle d'une partie de l'aube de la figure 1,
[Fig.3a-3d] les figures 3a à 3d sont des vues schématiques de détails d'une plateforme externe d'une aube de rotor,
[Fig.4] la figure 4 est une vue schématique partielle en perspective d'une aube de rotor selon un mode de réalisation de l'invention, et
[Fig.5a-5d] les figures 5a à 5d sont des vues schématiques de détails de la plateforme externe de l'aube de la figure 4.

### Description détaillée de l'invention

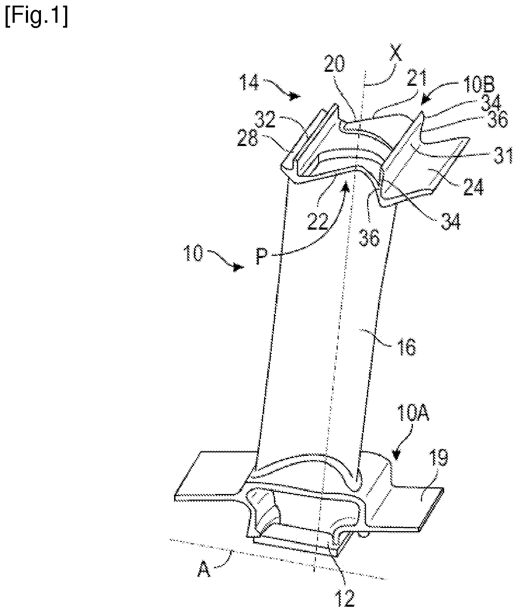

L'invention s'applique à une aube 10 de roue mobile telle que décrite ci-dessus en référence aux figures 1 et 2.

L'aube 10 comprend au moins une pale 16 qui s'étend entre deux plateformes, respectivement interne 19 et externe 20. La plateforme interne 19 est reliée à l'extrémité radialement interne de la pale et la plateforme externe 20 est reliée à l'extrémité radialement externe de la pale et comprend des revêtements 36 de matériau anti-usure.

Les figures 3a à 3d illustrent des détails d'un bord latéral 22 d'une plateforme 20, et en particulier de celui comportant une pointe en creux P destinée à recevoir une pointe en saillie du bord latéral 21 d'une aube adjacente.

Les éléments des figures 3a à 3d qui ont été décrits dans ce qui précède sont désignés par les mêmes références aux figures 3a à 3d.

Les figures 3a à 3d illustrent des paramètres qui sont relativement critiques sur l'apparition de criques dans le revêtement anti-usure 36 situé dans cette pointe en creux P. Ce revêtement 36 est schématiquement représenté par une zone hachurée Z1 à la figure 3a, et est situé dans une cuvette 38 de cette pointe en creux P.

Les inventeurs ont démontré que les dimensions géométriques d'une portion de surface cylindrique concave 40 de la pointe en creux P étaient importants pour réduire les risques d'apparition de criques. Cette portion de surface 40 est formée en partie dans la plateforme externe 20 et en partie dans un muret 42 qui est en saillie sur cette plateforme et qui est relié à la léchette 31. Cette portion de surface 40 s'étend le long et autour d'un axe virtuel Y sensiblement parallèle à l'axe d'empilement X.

Comme illustré à la figure 3a, la portion de surface 40 doit avoir un rayon R mesuré par rapport à l'axe Y, qui est supérieur ou égal à une certaine valeur.

Comme illustré à la figure 3d, le muret 42 doit de préférence avoir une épaisseur E mesurée dans une direction sensiblement perpendiculaire à l'axe Y, qui est supérieure ou égale à une certaine valeur.

Comme illustré à la figure 3b, la portion de surface 40 doit avoir une hauteur H mesurée le long de l'axe Y, qui représente au moins 150% de l'épaisseur E du muret 42.

Enfin, avantageusement, comme illustré à la figure 3c, le rapport L1/L2, qui sera explicité dans ce qui suit, doit être supérieur ou égal à une certaine valeur.

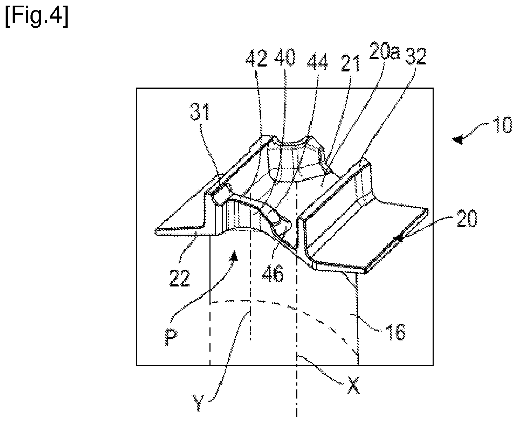

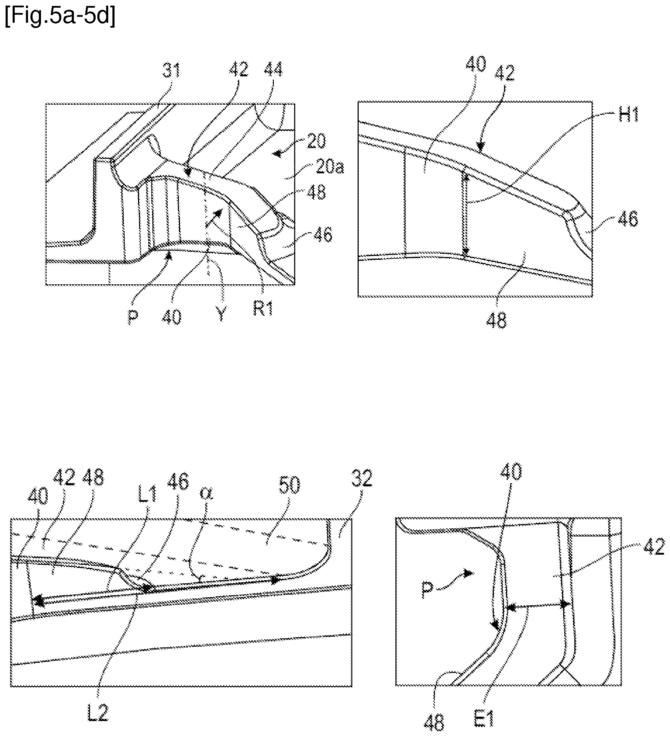

Les figures 4 et 5a à 5d illustrent un mode de réalisation d'une aube de rotor selon l'invention dont les paramètres ci-dessus ont été optimisés.

L'aube 10 de la figure 4 comprend les caractéristiques décrites ci-dessus en référence aux figures 1 et 2.

Les figures 4 et 5a permettent de visualiser le muret 42 qui s'étend depuis la léchette 31 jusqu'à distance de la léchette 32, le long du bord de la pointe en creux P.

Ce muret 42 comprend une surface de tête 44, opposée à la pale 16, qui s'étend depuis la léchette 31 et est raccordée par un premier congé 46 de raccordement à la surface 20a de la plateforme externe 20 sur laquelle le muret 42 est en saillie. Ce congé 46 s'étend sensiblement sur tout le pourtour du muret.

La pointe en creux P comprend la portion de surface cylindrique 40 concave formée en partie dans la plateforme externe 20 et en partie dans le muret 42.

Dans l'exemple représenté et de manière préférée :
- la portion de surface 40 a un rayon R1 qui est supérieur ou égal à 1,2mm (figure 5a), et
- la portion de surface 40 a une hauteur H1 qui est supérieure ou égale à 3mm (figure 5b).

Par ailleurs, de préférence, le muret 42 a une épaisseur E1 qui est supérieure ou égale à 2,5mm (figure 5d).

La pointe en creux P comprend une seconde portion de surface plane 48 qui s'étend depuis la première portion de surface 40 et qui est formée en partie dans la plateforme externe 20 et en partie dans le muret 42. Cette seconde portion de surface 48 s'étend sensiblement parallèlement à l'axe Y.

La distance L1 est la distance cumulée du muret 42 et du premier congé 46, mesurée depuis la première portion de surface 40 et le long de la seconde portion de surface 48.

La distance L2 est la distance cumulée du muret 42, du premier congé 46 et de la seconde surface 20a de la plateforme 20 jusqu'à un second congé 50 de raccordement de cette seconde surface à la léchette 32 située à distance du muret 42 (figure 5c).

Les distances L1 et L2 sont mesurées depuis la première portion de surface 40 et le long de la seconde portion de surface 48. De manière préférée, le rapport L1/L2 est supérieur ou égal à 40%.

Par ailleurs, la surface de tête 44 du muret 42 est de préférence inclinée par rapport à la surface 20a d'un angle α inférieur ou égal à 35° (figure 5c).

## Revendications

1. Aube de rotor (10) pour une turbomachine d'aéronef, cette aube présentant un axe (A) de rotation une fois solidaire d'un rotor et un axe d'empilement (X) et comportant une pale (16) s'étendant le long de l'axe d'empilement entre une plateforme interne (19) et une plateforme externe (20) qui porte au moins une léchette (31, 32) en saillie, ladite pale comportant un intrados (16a) et un extrados et ladite plateforme externe comportant, du côté desdits intrados et extrados, des bords latéraux (21, 22) configurés pour coopérer par complémentarité de formes avec des bords latéraux (22, 21) complémentaires d'aubes adjacentes, ces bords latéraux comportant chacun un revêtement (36) anti-usure, un de ces bords latéraux formant une pointe en creux (P) comportant une cuvette (38) de réception dudit revêtement et comportant en outre une première portion de surface cylindrique concave (40) formée en partie dans ladite plateforme externe (20) et en partie dans un muret (42) qui est en saillie sur cette plateforme et qui est relié à ladite au moins une léchette (31), cette première portion de surface (40) s'étendant le long et autour d'un axe virtuel (Y) sensiblement parallèle audit axe d'empilement (X), **caractérisée en ce que** :
- ledit muret (42) a une épaisseur (E1) mesurée dans une direction sensiblement perpendiculaire audit axe virtuel (Y), qui est supérieure ou égale à 2,5mm,
- ladite première portion de surface (40) a une hauteur (H1) mesurée le long dudit axe virtuel (Y), qui est égale à au moins 150% de l'épaisseur (E1) du muret (42).

2. Aube (10) selon la revendication précédente, dans laquelle ladite première portion de surface (40) a un rayon (R1) mesuré par rapport audit axe virtuel (Y), qui est supérieur ou égal à 1,2mm.

3. Aube (10) selon l'une des revendications précédentes, dans laquelle ladite pointe en creux (P) comprend une seconde portion de surface (48) plane qui s'étend depuis ladite première portion de surface (42) du côté opposé à ladite au moins une léchette à laquelle est relié ledit muret, cette second portion (48) étant formée en partie dans ladite plateforme externe (20) et en partie dans ledit muret (42), et s'étendant sensiblement parallèlement audit axe virtuel (Y).

4. Aube (10) selon la revendication précédente, dans laquelle ladite plateforme externe (20) comprend une première surface reliée à ladite pale, et une seconde surface (20a) opposée sur laquelle ledit muret (42) est en saillie, ce muret comportant une surface de tête (44), opposée à ladite pale (16), qui s'étend depuis ladite au moins une léchette (31) jusqu'à un premier congé (46) de raccordement de cette surface de tête (44) à ladite seconde surface (20a).

5. Aube (10) selon la revendication précédente, dans laquelle ladite surface de tête (44) est inclinée par rapport à ladite seconde surface (20a) d'un angle (α) inférieur ou égal à 35°.

6. Aube (10) selon la revendication 4 ou 5, dans laquelle ladite plateforme externe (20) porte deux léchettes (31, 32) en saillie sensiblement parallèles, ledit muret (42) s'étendant depuis une première des léchettes (31) jusqu'à distance d'une seconde des léchettes (32), la distance cumulée (L1) du muret (42) et dudit premier congé (46), mesurée depuis ladite première portion de surface (40) et le long de ladite seconde portion de surface (48), représentant au moins 40% de la distance cumulée (L2) du muret (42), dudit premier congé (46) et de ladite seconde surface (20a) de la plateforme (20) jusqu'à un second congé (50) de raccordement de cette seconde surface (20a) à la seconde léchette (32), ces distances (L1, L2) étant mesurées depuis ladite première portion de surface (40) et le long de ladite seconde portion de surface (48).

7. Roue de rotor pour une turbomachine d'aéronef, comportant un disque portant à sa périphérie une rangée annulaire d'aubes (10) selon l'une des revendications précédentes.

8. Roue selon la revendication précédente, dans laquelle les bords latéraux (21, 22) des aubes (10) sont emboîtés les uns dans les autres et comprennent des revêtements (36) anti-usure en appui les uns sur les autres, les aubes étant en appui les unes sur les autres uniquement par l'intermédiaire de leurs revêtements.

9. Turbomachine d'aéronef, comportant au moins une aube (10) selon l'une des revendications 1 à 6 ou une roue selon la revendication 7 ou 8.

## Patentansprüche

1. Rotorleitschaufel (10) für ein Flugzeugturbostrahltriebwerk, wobei diese Leitschaufel eine Drehachse (A), die einmal mit einem Rotor fest verbunden ist, und eine Stapelachse (X) aufweist und ein Schaufelblatt (16) umfasst, das sich entlang der Stapelachse zwischen einer inneren Plattform (19) und einer äußeren Plattform (20) erstreckt, das mindestens eine hervorstehende Dichtungslippe (31, 32) trägt, wobei das Schaufelblatt eine innere Wölbungsfläche (16a) und eine äußere Wölbungsfläche umfasst und die äußere Plattform auf der Seite der inneren Wölbungsfläche und der äußeren Wölbungsfläche Seitenränder (21, 22) umfasst, die konfiguriert sind, um durch Formenkomplementarität mit komplementären Seitenrändern (22, 21) benachbarter Leitschaufeln zusammenzuwirken, wobei diese Seitenränder jeweils eine verschleißmindernde Beschichtung (36) umfassen, wobei einer dieser Seitenränder eine eingedrückte Spitze (P) bildet, die eine Vertiefung (38) zur Aufnahme der Beschichtung umfasst, und weiter einen zylindrischen konkaven ersten Oberflächenabschnitt (40) umfasst, der teilweise in der äußeren Plattform (20) und teilweise in einer Wand (42), die von dieser Plattform hervorsteht und die mit der mindestens einen Dichtungslippe (31) verbunden ist, gebildet ist, wobei sich dieser erste Oberflächenabschnitt (40) entlang und um eine virtuelle Achse (Y) herum erstreckt, die im Wesentlichen parallel zur Stapelachse (X) verläuft, **dadurch gekennzeichnet, dass**:
- die Wand (42) eine Dicke (E1) aufweist, gemessen in einer Richtung im Wesentlichen senkrecht zur virtuellen Achse (Y), die größer oder gleich 2,5 mm ist,
- der erste Oberflächenabschnitt (40) eine Höhe (E1) aufweist, gemessen entlang der virtuellen Achse (Y), die mindestens 150 % der Dicke (E1) der Wand (42) beträgt.

2. Leitschaufel (10) nach dem vorstehenden Anspruch, wobei der erste Oberflächenabschnitt (40) einen Radius (R1) größer oder gleich 1,2 mm aufweist, gemessen in Bezug auf die virtuelle Achse (Y).

3. Leitschaufel (10) nach einem der vorstehenden Ansprüche, wobei die eingedrückte Spitze (P) einen ebenen zweiten Oberflächenabschnitt (48) umfasst, der sich ausgehend vom ersten Oberflächenabschnitt (42) auf der Seite erstreckt, die der mindestens einen Dichtungslippe gegenüberliegt, an der die Wand verbunden ist, wobei dieser zweite Oberflächenabschnitt (48) teilweise in der äußeren Plattform (20) und teilweise in der Wand (42) gebildet ist und sich im Wesentlichen parallel zur virtuellen Achse (Y) erstreckt.

4. Leitschaufel (10) nach dem vorstehenden Anspruch, wobei die äußere Plattform (20) eine erste Oberfläche, die mit dem Schaufelblatt verbunden ist, und eine gegenüberliegende zweite Oberfläche (20a) umfasst, von der die Wand (42) hervorsteht, wobei diese Wand eine Kopffläche (44) umfasst, die dem Schaufelblatt (16) gegenüberliegt, die sich ausgehend von der mindestens einen Dichtungslippe (31) bis zur ersten Verbindungsauskehlung (46) dieser Kopffläche (44) mit der zweiten Oberfläche (20a) erstreckt.

5. Leitschaufel (10) nach dem vorstehenden Anspruch, wobei die Kopffläche (44) in Bezug auf die zweite Oberfläche (20a) um einen Winkel (α) kleiner oder gleich 35° geneigt ist.

6. Leitschaufel (10) nach Anspruch 4 oder 5, wobei die äußere Plattform (20) zwei hervorstehende im Wesentlichen parallele Dichtungslippen (31, 32) trägt, wobei sich die Wand (42) ausgehend von einer ersten der Dichtungslippen (31) bis zu einem Abstand von einer zweiten der Dichtungslippen (32) erstreckt, wobei der kumulierte Abstand (L1) von der Wand (42) und von der ersten Auskehlung (46), gemessen ausgehend von dem ersten Oberflächenabschnitt (40) und entlang des zweiten Oberflächenabschnitts (48), mindestens 40 % des kumulierten Abstands (L2) von der Wand (42), von der ersten Auskehlung (46) und von der zweiten Oberfläche (20a) der Plattform (20) bis zur zweiten Verbindungsauskehlung (50) dieser zweiten Oberfläche (20a) mit der zweiten Dichtungslippe (32) darstellt, wobei diese Abstände (L1, L2) ausgehend vom ersten Oberflächenabschnitt (40) und entlang des zweiten Oberflächenabschnitts (48) gemessen werden.

7. Rotorrad für ein Flugzeugturbostrahltriebwerk, eine Scheibe umfassend, die an ihrem Umfang eine ringförmige Reihe von Leitschaufeln (10) nach einem der vorstehenden Ansprüche trägt.

8. Rad nach dem vorstehenden Anspruch, wobei die Seitenränder (21, 22) der Leitschaufeln (10) ineinander eingefügt sind und verschleißmindernde Beschichtungen (36) umfassen, die aufeinander aufliegen, wobei die Leitschaufeln ausschließlich mittels ihrer Beschichtungen aufeinander aufliegen.

9. Flugzeugturbostrahltriebwerk, das mindestens eine Leitschaufel (10) nach einem der Ansprüche 1 bis 6 oder ein Rad nach Anspruch 7 oder 8 umfasst.

## Claims

1. A rotor vane (10) for an aircraft turbine engine, this vane having an axis (A) of rotation once it is secured to a rotor and a stacking axis (X) and comprising a blade (16) extending along the stacking axis between an internal platform (19) and an external platform (20) which bears at least one projecting wiper (31, 32), said blade comprising an intrados (16a) and an extrados and said external platform comprising, on the side of said intrados and extrados, lateral edges (21, 22) configured to cooperate in a form-fitting manner with complementary lateral edges (22, 21) of adjacent vanes, these lateral edges each comprising an anti-wear coating (36), one of these lateral edges forming a hollow tip (P) comprising a bowl (38) for receiving said coating and also comprising a first concave cylindrical surface segment (40) formed partly in said external platform (20) and partly in a low wall (42) which projects from this platform and which is connected to said at least one wiper (31), this first surface segment (40) extending along and about a virtual axis (Y) substantially parallel to said stacking axis (X),
**characterised in that**:
- said low wall (42) has a thickness (E1) measured in a direction substantially perpendicular to said virtual axis (Y), which is greater than or equal to 2.5mm,
- said first surface segment (40) has a height (H1) measured along said virtual axis (Y), which is equal to at least 150% of the thickness (E1) of the low wall (42).

2. The vane (10) according to the preceding claim, wherein said first surface segment (40) has a radius (R1) measured with respect to said virtual axis (Y), which is greater than or equal to 1.2mm.

3. The vane (10) according to any one of the preceding claims, wherein said hollow tip (P) comprises a second planar surface segment (48) which extends from said first surface segment (42) on the opposite side of said at least one wiper to which said low wall is connected, this second segment (48) being formed partly in said external platform (20) and partly in said low wall (42), and extending substantially parallel to said virtual axis (Y).

4. The vane (10) according to the preceding claim, wherein said external platform (20) comprises a first surface connected to said blade, and a second opposite surface (20a) on which said low wall (42) projects, this low wall comprising a head surface (44), opposite said blade (16), which extends from said at least one wiper (31) to a first fillet (46) connecting said head surface (44) to said second surface (20a).

5. The vane (10) according to the preceding claim, wherein said head surface (44) is inclined with respect to said second surface (20a) by an angle (α) less than or equal to 35°.

6. The vane (10) according to claim 4 or 5, wherein said external platform (20) carries two substantially parallel projecting wipers (31, 32), said low wall (42) extending from a first one of the wipers (31) to a distance from a second one of the wipers (32), the cumulative distance (L1) of the low wall (42) and said first fillet (46), measured from said first surface segment (40) and along said second surface segment (48), representing at least 40% of the cumulative distance (L2) of the low wall (42), of said first fillet (46) and of said second surface (20a) of the platform (20) to a second fillet (50) connecting this second surface (20a) to the second wiper (32), these distances (L1, L2) being measured from said first surface segment (40) and along said second surface segment (48).

7. A rotor wheel for an aircraft turbine engine, comprising a disc carrying at its periphery an annular row of vanes (10) according to one of the preceding claims.

8. The wheel according to the preceding claim, wherein the lateral edges (21, 22) of the vanes (10) are nested into one another and comprise anti-wear coatings (36) bearing on one another, the vanes bearing on one another solely by means of their coatings.

9. An aircraft turbine engine, comprising at least one vane (10) according to one of claims 1 to 6 or one wheel according to claim 7 or 8.
